# EUROPÄISCHE PATENTANMELDUNG

(11) **EP 3 398 749 A1**
(43) Veröffentlichungstag der Anmeldung: **07.11.2018**
(21) Anmeldenummer: 18158717.1
(22) Anmeldetag: 26.02.2018
(51) Int. Cl.: B29C 45/27

(54) **EINSATZ ZUR VERWENDUNG IN EINER SPRITZGIESSDÜSE UND SPRITZGIESSDÜSE MIT EINEM SOLCHEN EINSATZ**

(30) Priorität: 06.04.2017 DE 102017107443
(71) Anmelder: Günther Heisskanaltechnik GmbH, 35066 Frankenberg (DE)
(72) Erfinder: Günther, Herbert, 35108 Allendorf (DE); Sommer, Siegrid, 35099 Burgwald (DE); Schnell, Torsten, 35104 Lichtenfels (DE)
(74) Vertreter: Patentanwälte Olbricht Buchhold Keulertz

(57) **Zusammenfassung**

Die Erfindung betrifft einen Einsatz (1) zur Verwendung in einer Spritzgießdüse, mit einem Einsatzkörper (2) mindestens aus einem hochwärmeleitenden Material, in dem mindestens ein Strömungskanal (6) mit einer Eintrittsöffnung (7) und einer Austrittsöffnung (8) ausgebildet ist, wobei der Einsatzkörper (2) einen Halsabschnitt (3), zum Verbinden mit der Spritzgießdüse, einen Endabschnitt (5), zum Einsetzen in eine Formkavität eines Formeinsatzes und einen radial gegenüber dem Endabschnitt (5) vorstehenden Flansch (4) mit einer Anschlagfläche (9) aufweist, wobei die Anschlagfläche (9) auf einer der Austrittsöffnung (8) zugewandten Fläche des radial vorstehenden Flansches (4) ausgebildet ist. Erfindungsgemäß weisen die Anschlagfläche (9) und der Endabschnitt (5) zumindest teilweise eine äußere Beschichtung (10) aus einem zweiten Material mit einer geringen Wärmeleitfähigkeit auf.

## Beschreibung

Die Erfindung betrifft gemäß dem Oberbegriff von Anspruch 1 einen Einsatz zur Verwendung in einer Spritzgießdüse sowie eine Spritzgießdüse für ein Spritzgießwerkzeug mit einem erfindungsgemäßen Einsatz gemäß Anspruch 10.

Spritzgießdüsen, insbesondere Heißkanaldüsen, werden in Spritzgießwerkzeugen eingesetzt, um eine fließfähige Masse, beispielsweise ein Kunststoffmaterial, bei einer vorgegebenen Temperatur unter hohem Druck einen trennbaren Formeinsatz zuzuführen. Sie haben meist ein Materialrohr mit einem Strömungskanal, der über eine Einlassöffnung mit einem Verteilerkanal in einer Verteilerplatte strömungsverbunden ist und über eine Auslassöffnung in der Angussöffnung des Formeinsatzes (Formnest) mündet.

Alle folgenden Ausführungen beziehen sich sowohl auf Heißkanalsysteme als auch auf Kaltkanalsysteme.

Damit das fließfähige Material innerhalb des Strömungskanals der Heißkanaldüse nicht vorzeitig abkühlt und erstarrt, ist eine Heizvorrichtung vorgesehen, die außen auf das Materialrohr aufgesetzt oder aufgebracht ist. Um ferner zu erreichen, dass die fließfähige Masse bis an die Angussöffnung heran auf einer gleichmäßigen Temperatur gehalten wird, ist endseitig in dem Materialrohr eine Wärmeleithülse aus einem hochwärmeleitfähigen Material eingesetzt, die den Strömungskanal fortsetzt und endseitig die Auslassöffnung für die Spritzgießdüse bildet.

Bei einer offenen Düse ist die Wärmeleithülse meist als Düsenmundstück ausgebildet und mit einer Düsenspitze versehen, die mit ihrer kegelförmigen Spitze in oder kurz vor der Ebene der Angussöffnung endet. Bei einer Nadelverschlussdüse ist endseitig in der Auslassöffnung der Wärmeleithülse ein Dichtsitz für eine Verschlussnadel ausgebildet, die mittels eines Nadelantriebs zwischen einer Öffnungs- und einer Schließstellung hin und her bewegbar ist.

Bei der Verarbeitung von abrasiven Materialien oder von Spritzgießmassen, die abrasive Bestandteile enthalten, kann es an der Wärmeleithülse, insbesondere an der Auslassöffnung zu starkem Verschleiß kommen, so dass die Wärmeleithülse oder - je nach Konstruktion - die gesamte Heißkanaldüse relativ häufig ausgetauscht werden muss. Insbesondere bei Nadelverschlussdüsen entstehen Beschädigungen am Dichtsitz für die Verschlussnadel, so dass diese bei der periodischen Bewegung von einer Öffnungs- in eine Schließstellung nicht mehr exakt geführt werden kann und die Auslassöffnung nicht mehr dicht geschlossen wird.

Zudem sind die einzelnen Bauteile einer Spritzgießdüse generell einem abrasiven und adhäsiven Verschleiß ausgesetzt. Dieser Verschleiß basiert darauf, dass metallische Bauteile an anderen metallischen Bauteilen reiben, ohne dass es möglich ist einen Schmierstoff einzusetzen, welcher die herzustellenden Spritzgussprodukte verunreinigen könnte.

Um Verschleiß zu vermeiden, schlägt WO 2005/018906 A1 einen Einsatz vor, der vorzugsweise aus verschleißfestem Material ausgebildet ist. Dieser ist an dem formeinsatzseitigen Ende eines Düsenmundstücks angeordnet und entweder an sich oder zusammen mit dem Düsenmundstück längsverschieblich ausgebildet. Während des Betriebes der Spritzgießdüse ist der Einsatz zwischen dem Düsenkörper und dem Formeinsatz eingeklemmt. Der Einsatz dient dem Schutz des Düsenmundstücks vor starkem Verschleiß und optimiert die Nadelführung bei Nadelverschlussdüsen, da er sowohl für die Verschlussnadel als auch für die Düse als Zentrierkörper fungiert.

Nachteilig hierbei ist, dass der Einsatz nur aus einem einheitlichen Material gefertigt werden kann. Der Einsatz besteht daher entweder aus verschleißfestem Material oder man verwendet - wie in einer anderen Ausführungsform der WO 2005/018906 A1 - hochwärmeleitfähiges Material.

Auch WO 2003/070446 A1 schlägt einen Einsatz vor, der als Ventilnadelführung und als Verschleißschutzmittel fungiert. Neben der bereits aus WO 2005/018906 A1 bekannten Ausführungsform mit einem entweder aus thermisch isolierendem oder thermisch leitfähigem Material hergestellten einstückigen Einsatz, schlägt WO 2003/070446 A1 eine zweiteilige Ausführungsform des Einsatzes vor, bei der die zwei Einzelteile des Einsatzes unterschiedliche Materialeigenschaften aufweisen können. Dabei wird beispielsweise ein äußeres Teil (Isolierungsteil) aus einem thermisch isolierenden Material und ein Innenteil (Führungsteil) aus einem thermisch leitfähigen Material oder aus einem abnutzungsbeständigen Material, vorgeschlagen. Das thermisch isolierende Material wird verwendet, um die Wärmeverluste zum Formeinsatz zu reduzieren und das thermisch leitfähige Material wird verwendet, um Wärme von der Spitze zu der Schmelze in der Führungsöffnung zu leiten.

Nachteilig bei dieser Ausführungsform ist, dass die Einzelteile des Einsatzes separat aus den verschiedenen Materialien hergestellt und einzeln in der Spritzgießdüse montiert werden müssen. Auch müssen bei einem notwendigen Austausch beide Teile separat entnommen werden. Dies erhöht den Arbeitsaufwand und die Montagekosten. Ferner kann es vorkommen, dass sich die beiden Einzelteile unterschiedlich stark abnutzen, was in der Handhabung unpraktisch ist und zusätzlichen Aufwand bei der Wartung und Kontrolle des Spritzgießwerkzeugs verursacht. Ein weiterer Nachteil besteht darin, dass die zwei- oder mehrteiligen Einsätze relativ große Abmessungen aufweisen, was sich ungünstig auf die Baugröße der Heißkanaldüse und damit ungünstig auf die realisierbaren Stichmaße bzw. Nestabstände auswirkt.

Ziel der Erfindung ist es, diese und weitere Nachteile des Standes der Technik zu überwinden und einen kompakten Einsatz für eine Spritzgießdüse zu schaffen, der in einem einzigen Bauteil mehrere Materialeigenschaften nutzbar macht. Insbesondere soll eine Wärmeableitung zum Spritzgießwerkzeug oder Formeinsatz vermieden werden. Zudem soll eine geringe Baugröße der Spritzgießdüse ermöglicht werden. Er soll insbesondere bei geringen Abmessungen mit einfachen Mitteln kostengünstig aufgebaut und innerhalb des Werkzeugs leicht zu handhaben sein. Der Einsatz soll ferner der hohen Wechselbelastung durch Abkühlung und Aufheizen dauerhaft standhalten und verschleißfest sein. Zudem sollte der Einsatz austauschbar sein.

Hauptmerkmale der Erfindung sind im kennzeichnenden Teil von Anspruch 1 und Anspruch 10 angegeben. Ausgestaltungen sind Gegenstand der Ansprüche 2 bis 9 und 11 bis 15.

Bei einem Einsatz zur Verwendung in einer Spritzgießdüse, mit einem Einsatzkörper aus mindestens einem hochwärmeleitenden Material, in dem mindestens ein Strömungskanal mit einer Eintrittsöffnung und einer Austrittsöffnung ausgebildet ist, wobei der Einsatzkörper einen Halsabschnitt, zum Verbinden mit der Spritzgießdüse, einen Endabschnitt, zum Einsetzen in eine Formkavität eines Formeinsatzes und einen radial gegenüber dem Endabschnitt vorstehenden Flansch mit einer Anschlagfläche aufweist, wobei die Anschlagfläche auf einer der Austrittsöffnung zugewandten Fläche des radial vorstehenden Flansches ausgebildet ist, sieht die Erfindung vor, dass die Anschlagfläche und der Endabschnitt zumindest teilweise eine äußere Beschichtung aus einem zweiten Material mit einer geringen Wärmeleitfähigkeit aufweist.

Damit ist es möglich, in nur einem einzigen Bauteil, das beispielsweise in das untere, formeinsatzseitige Ende eines Materialrohrs oder einer Wärmeleithülse der Spritzgießdüse eingesetzt ist, mehrere Materialeigenschaften zu kombinieren und für die Spritzgießdüse und das zu verarbeitende fließfähige Material zu nutzen, ohne dass mehrere verschiedene Bauteile benötigt und montiert werden müssen. Dabei können die verschiedenen Materialien den Anforderungen entsprechend gewählt und zusammengestellt werden, wobei das zweite Material der Beschichtung insbesondere eine geringere spezifische Wärmeleitfähigkeit als das erste Material aufweist. Es ist bevorzugt den Einsatzkörper des Einsatzes aus einem hochwärmeleitfähigen Material zu fertigen, um die von einer Heizung der Spritzgießdüse erzeugte Wärme möglichst weit bis an die Angussöffnung heranzubringen. Die Beschichtung hingegen ist aus einem Material mit geringer Wärmeleitfähigkeit gefertigt, um die Wärmeübertragung auf andere Bauteile zu verringern. Die Beschichtung ist dabei bevorzugt kraft-, stoff- und/oder formschlüssig auf die radial äußere Fläche des Endabschnitts und die Anschlagfläche des Einsatzkörpers aufgebracht. Dadurch wird eine dauerhafte Verbindung der Beschichtung und des Einsatzkörpers zueinander gewährleistet. Der Endabschnitt und die Anschlagsfläche aus einem hochwärmeleitfähigen Material und die Beschichtung aus einem zweiten Material sind dabei bevorzugt über eine Kontaktfläche miteinander verbunden.

In einer bevorzugten Ausgestaltung ist vorgesehen, dass der Endabschnitt und die Anschlagsfläche im Wesentlichen vollständig eine Beschichtung aus einem zweiten Material aufweisen. Durch die isolierenden Eigenschaften der Beschichtung wird eine Wärmeübertragung vom Einsatzkörper auf die umliegenden Bauteile der Düse bzw. des Werkzeugs bestmöglich verhindert, ohne dass sich die Baugröße des Einsatzkörpers ändert.

Vorzugsweise ist vorgesehen, dass sowohl das hochwärmeleitfähige Material als auch das zweite Material mit einer geringen Wärmeleitfähigkeit verschleißfest sind und somit mechanischen Beanspruchungen durch die fließfähige Masse oder umliegende Bauteilen, beispielweise in Form eines Formeinsatzes, standhalten.

Durch die Beschichtung des Endabschnitts und der Anschlagfläche mit einem zweiten unterschiedlichen Material können die vorteilhaften Eigenschaften der Materialien punktgenau und auf kleinstem Bauraum bestmöglich genutzt werden. Ein kosten- und wartungsintensiver Einbau zweier Einzelteile wird vermieden. Ebenso sind zwischen den beiden Materialien keine aufwendigen Dichtungselemente oder Dichtflächen notwendig, die ggf. zu Leckagen an oder in der Spritzgießdüse bzw. im Werkzeug führen könnten. Die Beschichtung und der Einsatzkörper sind vielmehr stets fest miteinander verbunden und der Einsatz bildet in der Handhabung ein einheitliches Bauteil mit minimalen Abmessungen.

In einer bevorzugten Ausführungsform ist das zweite Material mit einer geringen Wärmeleitfähigkeit ein keramischer Werkstoff. Keramische Werkstoffe weisen eine geringe Wärmeleitfähigkeit auf und sind zudem verschleißfest und haltbar. Dadurch kann ein Einsatz bereitgestellt werden, der kaum bis gar keine Wärme auf den Formeinsatz überträgt und zudem eine gute Beständigkeit gegenüber mechanischen Beanspruchungen aufweist. Vorzugsweise weist das zweite Material Zirkoniumoxid auf. Keramiken auf Zirkoniumoxidbasis verfügen über eine geringe Wärmeleitfähigkeit, die geringer ist als die Wärmeleitfähigkeit von metallischen Werkstoffen, beispielweise Stahl, welche bevorzugt als hochwärmeleitendes Material des Einsatzkörpers verwendet werden. Zusätzlich weisen Zirkoniumoxid-Keramiken einen zu metallischen Werkstoffen, insbesondere Stahl, ähnlichen Ausdehnungskoeffizienten auf. Somit wird gewährleistet, dass die äußere Beschichtung auch schnellen Aufwärm- und Abkühlprozessen standhält.

Alternativ ist bevorzugt vorgesehen, dass das zweite Material mit einer geringen Wärmeleitfähigkeit einen Kunststoff aufweist. Kunststoffe weisen eine geringe Wärmeleitfähigkeit auf und sind zudem einfach zu verarbeiten, so dass die Herstellung eines Einsatzes mit einer Beschichtung mit Kunststoff einfach und kostengünstig durchführbar ist. Bevorzugt beinhaltet der Kunststoff Polytetrafluorethylen. Dieser Kunststoff weist eine hohe Schmelztemperatur und Langzeitgebrauchstemperatur auf, so dass die Beschichtung nicht beim Gebrauch schmilzt und der erfindungsgemäße Einsatz möglichst langlebig ausgebildet ist.

Vorzugsweise weist das hochwärmeleitende Material des Einsatzkörpers und das zweite Material mit geringer Wärmeleitfähigkeit der Beschichtung einen im Wesentlichen gleichen Wärmeausdehnungskoeffizienten auf. Bei nahezu gleichen Ausdehnungskoeffizienten kann der Einsatz zahlreiche Aufwärm- und Abkühlungszyklen durchlaufen, ohne dass beispielweise die Beschichtung abplatzt.

In einer bevorzugten Ausgestaltung weist der Endabschnitt eine Stirnfläche auf, in der die Austrittsöffnung eingelassen ist, wobei die äußere Beschichtung aus dem zweiten Material mit einer geringen Wärmeleitfähigkeit vor der Stirnfläche endet. Dadurch besteht die Stirnfläche des Einsatzes ausschließlich beispielweise aus dem hochwärmeleitfähigen Material des Einsatzkörpers, welches bevorzugt einen metallischen Werkstoff aufweist. Die Stirnfläche des Einsatzes ist einer erhöhten mechanischen Belastung ausgesetzt, da diese immer wieder in Kontakt mit einer Angussöffnung eines Formeinsatzes gebracht wird. Zudem ist die Stirnfläche auch beim Montieren des Einsatzes in einer Spritzgießdüse erhöhten mechanischen Belastungen ausgesetzt. Diese erhöhten mechanischen Belastungen könnten an einer Grenzfläche zwischen zwei Materialien zu einer schnelleren Abnutzung des weniger verschleißfesten Materials und einem Abplatzen der Beschichtung führen. Die Vermeidung einer solchen Grenzfläche gewährleistet eine langlebige Verwendung des Einsatzes.

Vorzugsweise ist die äußere Beschichtung des Endabschnitts und/oder der Anschlagfläche in einer Vertiefung des Endabschnitt und/oder der Anschlagfläche angeordnet, so dass der Endabschnitt und/oder die Anschlagfläche aus dem hochwärmeleitfähigen Material und die äußere Beschichtung aus einem zweiten Material an einer Grenzfläche zwischen den beiden Materialien eine ebene Außenfläche ausbilden. Durch diese Bauweise entsteht keine hervorstehende Kante, die erhöhten mechanischen Belastungen ausgesetzt wäre und zu einem vermehrten Verschleiß des hervorstehenden Materials, insbesondere der Beschichtung, führen würde. Die Außenfläche des Einsatzkörpers ist dabei die radial äußere Fläche des Einsatzkörpers. Die Außenfläche der Flansches, die der Austrittsöffnung des Endabschnitts zugewandt ist, entspricht der Anschlagfläche. Diese Bauweise des Einsatzes führt zu einer formschlüssigen Verbindung des Endabschnitt und der Anschlagfläche des Flansches mit der äußeren Beschichtung.

In einer alternativen Ausführungsform ist vorgesehen, dass die Beschichtung die Stirnfläche des Endabschnitts vollständig abdeckt, wobei die Austrittsöffnung in der Beschichtung ausgebildet ist. Auch durch diese Ausführungsform weist die Stirnfläche, die einer erhöhten mechanischen Belastung ausgesetzt ist, keine Grenzfläche zwischen zwei unterschiedlichen Materialien auf, wodurch ein Abplatzen des Beschichtungsmaterials verhindert wird. Dadurch kann eine langlebige Verwendung des Einsatzes gewährleistet werden.

Zudem bewirkt die Beschichtung aus einem Material mit einer geringen Wärmeleitfähigkeit, die auch die Stirnseite des Einsatzkörpers bedeckt, dass der Einsatzkörper bestmöglich gegenüber einem Formeinsatz thermisch isoliert ist. Die Wärme aus einer Heizung wird nicht auf den Formeinsatz übertragen, wodurch der Einsatz der Spritzgießdüse einen geringeren Wärmeverlust aufweist und Energiekosten eingespart werden können.

Die Beschichtung aus einem zweiten Material mit einer geringen Wärmeleitfähigkeit kann mit bekannten Beschichtungsverfahren auf den Endabschnitt und die Anschlagfläche, insbesondere im Bereich der Vertiefung, aufgebracht werden.

In einer bevorzugten Ausgestaltung ist vorgesehen, dass der Flansch auf einer radial äußeren Fläche ein Gewinde aufweist. Mit Hilfe dieses Gewindes kann der Einsatz einfach in der Spritzgießdüse montiert und demontiert werden. Sollte beispielweise der Einsatz abgenutzt oder Teile des Einsatzes, beispielweise der Beschichtung, beschädigt sein, kann der Einsatz einfach ausgetauscht werden, ohne dass aufwendige Reparaturarbeiten am Spritzgießwerkzeug notwendig sind.

Vorzugsweise ist der Einsatzkörper rotationssymmetrisch zu einer Längsachse L ausgebildet. Hierdurch ist der Einsatz nicht nur einfach herzustellen, sondern auch schnell und fehlerfrei in die Spritzgießdüse einsetzbar.

In einer bevorzugten Ausführungsform ist der Einsatzköper aus hochwärmeleitendem Material mit dem Endabschnitt, dem Halsabschnitt und dem Flansch einstückig ausgebildet. Ein einstückig ausgebildeter Einsatzkörper ist einfach und kostengünstig herstellbar und gewährleistet zudem eine dauerhafte Funktion des Einsatzes, insbesondere des Strömungskanals. Der gesamte Einsatzkörper weist ein einziges hochwärmleitfähiges Material.

In einer alternativen Ausführungsform ist bevorzugt vorgesehen, dass der Einsatzkörper zweistückig oder zweiteilig ausgebildet ist. Dabei weist der Einsatzkörper bevorzugt einen ersten Teil und einen zweiten Teil auf, wobei der erste Teil im Wesentlichen vom Halsabschnitt und der zweite Teil im Wesentlichen vom Endabschnitt gebildet werden. Es ist bevorzugt vorgesehen, dass der erste Teil aus einem hochwärmeleitenden Material gefertigt ist und sich von Halsabschnitt des Einsatzkörpers bis zu einer Begrenzungsfläche erstreckt und dass der zweite Teil aus einem dritten Material gefertigt ist, welches von dem hochwärmeleitfähigen Material des ersten Teils verschiedenen ist, wobei sich der zweite Teil von der Begrenzungsfläche bis zum Endabschnitt des Einsatzkörpers erstreckt, und wobei der erste Teil und der zweite Teil in und/oder entlang der Begrenzungsfläche fest miteinander verbunden sind. Dabei weist der zweite Teil zumindest teilweise die Beschichtung aus einem zweiten Material mit einer geringen Wärmeleitfähigkeit auf, insbesondere weist der zweite Teil im Bereich des Endabschnitts und der Anschlagfläche die Beschichtung aus dem zweiten Material auf.

Damit ist es möglich, in nur einem einzigen Bauteil, das beispielsweise in das untere, formnestseitige Ende eines Materialrohrs oder einer Wärmeleithülse der Spritzgießdüse eingesetzt ist, mehrere Materialeigenschaften zu kombinieren und für die Spritzgießdüse und das zu verarbeitende fließfähige Material zu nutzen, ohne dass mehrere verschiedene Bauteile benötigt und montiert werden müssen. Dabei können die verschiedenen Materialien den Anforderungen entsprechend gewählt und zusammengestellt werden. Wird der erste Teil des Einsatzes aus einem hochwärmeleitfähigen Material gefertigt, kann die von einer Heizung der Spritzgießdüse erzeugte Wärme möglichst weit bis an die Angussöffnung herangeführt werden. Der zweite Teil hingegen aus einem dritten Material kann beispielweise aus einem verschleißfesten Material gefertigt sein, um den Verschleiß des Einsatzes zu reduzieren und damit die Standzeit der Spritzgießdüse zu erhöhen, insbesondere wenn der zweite Teil des Einsatzes den Dichtsitz für eine Verschlussnadel bildet.

Der erste Teil und der zweite Teil des Einsatzes können vorteilhaft als separate Teile gefertigt werden, die nach der Fertigung präzise und fest miteinander verbunden werden. Alternativ ist es auch möglich, zunächst einen Rohling aus einem Verbundstoff des hochwärmeleitfähigen Materials und des dritten Materials herzustellen und anschließend den Einsatz aus diesem Verbundstoff zu fertigen. Durch die Verbindung der aus zwei unterschiedlichen Materialien bestehenden Teile des Einsatzes mit zusätzlicher Beschichtung können die vorteilhaften Eigenschaften der Materialien punktgenau und auf kleinstem Bauraum bestmöglich genutzt werden. Ein kosten- und wartungsintensiver Einbau verschiedener Einzelteile wird vermieden. Ebenso sind zwischen den beiden Teilen keine aufwendigen Dichtungselemente oder Dichtflächen notwendig, die ggf. zu Leckagen an oder in der Spritzgießdüse bzw. im Werkzeug führen könnten. Die beiden Teile sind vielmehr stets fest miteinander verbunden und der Einsatz bildet in der Handhabung ein einheitliches Bauteil mit minimalen Abmessungen.

Die Verbindung erstreckt sich aufgrund der Begrenzungsfläche zwischen den unterschiedlichen verwendeten Materialien, sodass zwar die Eigenschaften mehrerer Materialien in einem Bauteil kombiniert werden, gleichzeitig aber eine klare Begrenzung der Materialien auf die verschiedenen Teile gewährleistet ist. Eine Mischung der beiden Stoffe außerhalb der Begrenzungsfläche wird vermieden. Dies trägt zur optimalen und präzisen Nutzung der Materialien bei der Verwendung eines Einsatzes in einer Spritzgießdüse bei.

Ausführungsformen der Erfindung sehen vor, dass der erste Teil und der zweite Teil stoffschlüssig, formschlüssig oder reibschlüssig miteinander verbunden sind. Mit einer stoffschlüssigen Verbindung lassen sich minimale Abmessungen erzielen. Denkbar sind aber auch mechanische Verbindungen in Form eines Formschlusses oder eines Reibschlusses, beispielsweise durch Verrasten, Verschrauben, Verpressen oder Schrumpfen.

Aufgrund des beschränkten Bauraums ist es insbesondere vorteilhaft, wenn der erste und der zweite Teil mittels Schweißen, vorzugsweise mittels Diffusionsschweißen oder Laserschweißen, stoffschlüssig miteinander verbunden sind.

Als optimales Verfahren zur Verbindung des ersten und des zweiten Teils hat sich das Schweißen erwiesen, weil der erste und der zweite Teil meist aus einem Metallwerkstoff ausgebildet sind und durch Schweißen eine zuverlässige und dauerhaft stabile Verbindung zwischen den Teilen ausgebildet werden kann. Insbesondere das Diffusionsschweißen weist dabei Vorteile gegenüber anderen Schweißmethoden auf. Die Qualität der Schweißverbindungen ist außerordentlich hoch. Es entsteht ein porenfreier, dichter Werkstoffverbund, der höchsten mechanischen, thermischen und korrosionstechnischen Anforderungen gerecht wird. Dabei muss beim Diffusionsschweißen kein Zusatzwerkstoff verwendet werden, so dass die Fügenaht keine Fremdlegierungsbestandteile aufweist und somit bei optimaler Ausführung grundwerkstoffähnliche Eigenschaften besitzt. Durch das Fehlen einer schmelzflüssigen Phase im Fügeprozess kann zudem eine hochgenaue und konturgetreue Verschweißung gewährleistet werden.

Zum Ausbilden stoffschlüssiger Verbindungen kommen neben dem Schweißen auch Verfahren wie Löten oder Kleben in Frage.

Alternativ kann der erste Teil mittels einer mechanischen Verbindungsanordnung mit dem zweiten Teil verbunden sein. Hierzu kann unter anderem eine Rastverbindung, eine Schraubverbindung, eine Pressverbindung oder eine Bajonettverbindung genutzt werden. Beide Teile können auch durch Schrumpfen miteinander verbunden werden. Alle vorgenannten Verbindungsarten haben den Vorteil, dass eine solche Verbindung des ersten Teils mit dem zweiten Teil dauerhaft fest und dicht ausgebildet ist.

Besonders vorteilhaft ist es, wenn es sich bei dem dritten Material des zweiten Teils um ein verschleißfestes Material handelt. Hierdurch kann - z.B. im Bereich einer Nadelführung - der Verschleiß des Einsatzes aufgrund des wiederholten Abgleitens der Ventilnadel entlang der Innenwände des Strömungskanals im Wirkbetrieb der Spritzgießdüse verringert werden. Gleichzeitig gewährleistet eine hochwärmeleitfähige Ausführung des ersten Teils des Einsatzes, welcher beispielsweise an einer Wärmeleithülse angeordnet sein kann, eine optimale Temperaturverteilung im Angussbereich.

Dabei hat es sich als vorteilhaft erwiesen, wenn das wärmeleitfähige Material und das verschleißfeste Material eine hohe Wärmeausdehnung aufweisen. Durch die Verwendung eines Materials mit hoher Wärmeausdehnung, dehnt sich der Einsatz beim Aufheizen des Spritzgießwerkzeugs gezielt aus, so dass der Einsatz nach Erreichen der Betriebstemperatur der Spritzgießdüse optimal zwischen Materialrohr und/oder Wärmeleithülse einerseits und Formeinsatz andererseits eingeklemmt ist und eine dauerhaft dichte Anordnung bildet.

In einer weiteren vorteilhaften Bauform weisen das Material des ersten Teils und das Material des zweiten Teils einen identischen oder annähernd gleichen Ausdehnungskoeffizient auf.

Sind die Ausdehnungskoeffizienten der beiden Teile des Einsatzes unterschiedlich, berücksichtigt die Differenz zwischen den thermischen Ausdehnungskoeffizienten des wärmeleitfähigen und des verschleißfesten Materials die elastischen Kapazitäten der Verbindung zwischen dem erstem und dem zweitem Teil, so dass die beiden Teile des Einsatzes stets dauerhaft und fest miteinander verbunden sind.

In einer speziellen Ausführungsform ist das verschleißfeste Material ein Werkzeugstahl. Dieser zeichnet sich durch seine guten Verschleißschutzeigenschaften aus. Dabei ist Werkzeugstahl kostengünstiger als andere Materialien mit vergleichbaren Verschleißschutzeigenschaften. Hierbei kann insbesondere ein Werkzeugstahl mit einer niedrigen Wärmeleitfähigkeit vorteilhaft sein, weil in diesem Fall eine thermische Trennung der Kunststoffschmelze von dem Formeinsatz des Spritzgusswerkzeugs erfolgt, was ein vorzeitiges Abkühlen der Kunststoffschmelze im Bereich des zweiten Abschnitts vermeidet. Die zusätzliche Beschichtung aus einem Material mit einer geringen Wäreleitfähigkeit unterstützt diesen Effekt zusätzlich.

Alternativ könnte auch eine Keramik, welche sich durch eine hohe Verschleißfestigkeit und geringe thermische Leitfähigkeit auszeichnet, als verschleißfestes Material eingesetzt werden.

Eine weitere Ausführungsform der Erfindung sieht vor, dass sich die Begrenzungsfläche, entlang der das erste Teil mit dem zweiten Teil verbunden ist, senkrecht oder schräg zur Längsachse des Einsatzkörpers erstreckt. Dadurch ergibt sich beispielsweise eine scheibenförmige Begrenzungsfläche mit minimaler Ausdehnung. Durch den senkrechten Verlauf der Begrenzungsfläche kann eine optimale Verbindung zwischen dem ersten und dem zweiten Teil hergestellt werden.

Alternativ hierzu kann sich die Begrenzungsfläche auch schräg zur Längsachse des Einsatzkörpers erstrecken, beispielsweise wenn eine größere Begrenzungsfläche gewünscht ist. Letztere kann beispielsweise konisch ausgebildet sein. Durch eine schräg zur Längsachse ausgerichtete Begrenzungsfläche lässt sich insbesondere eine stoffschlüssige Verbindung verstärken, da in diesem Fall ein größerer Abschnitt als Begrenzungsfläche zur Verfügung steht.

In einer weiteren speziellen Ausführungsform wird der Flansch bevorzugt von dem ersten Teil oder dem zweiten Teil gebildet. In beiden Varianten ist der Flansch einheitlich aus einem Material gebildet und weist die Eigenschaften des jeweiligen Materials auf. Auf diese Weise kann der Flansch beispielsweise entweder die wärmeleitende Funktion des Halsabschnitts fortsetzen oder den durch das verschleißfeste Material geschützten Bereich des Endabschnitts vergrößern.

Gemäß einer anderen Ausführungsform wird der Flansch von dem ersten Teil und dem zweiten Teil gebildet. Auf diese Weise können die Eigenschaften beider Materialien auf engstem Raum optimal kombiniert werden. Da der Flansch hauptsächlich als Stützflansch fungiert, weist dieser sowohl Bereiche auf, die Kontakt zu dem Formeinsatz haben, als auch Bereiche, die je nach Bedarf am Materialrohr, dem Düsenmundstück und/oder der Wärmeleithülse anliegen können. In beiden Bereichen des Flansches müssen dabei unterschiedliche Anforderungen erfüllt werden. Während die Temperatur im Übergangsbereich zwischen Flansch und erstem Abschnitt konstant hoch gehalten wird, ist gleichzeitig der Wärmeübergang vom Materialrohr, dem Düsenmundstück oder der Wärmeleithülse auf den Formeinsatz minimal. Zudem muss gerade an den Berührungsflächen von einer stärkeren Abnutzungsbelastung ausgegangen werden, sodass an diesen Stellen ein stärkerer Verschleißschutz gewährleistet ist. Da die beiden Teile aus den verschiedenen Materialien den Flansch ausbilden, können diese gegensätzlichen Anforderungen in einem Bauteil auf kleinstem Raum gleichzeitig erfüllt werden. Dies gilt insbesondere auch für den gesamten Einsatz.

Nach einer weiteren vorteilhaften Ausführungsform bildet der Einsatz einen Zentrierkörper für eine Ventilnadel einer Spritzgussdüse. Dabei bildet der Einsatz im ersten Teil und/oder im Halsabschnitt eine in Richtung des Flansches konisch zulaufende Wandung des Strömungskanals. Eine solche Wandung zentriert die Verschlussnadel während der Schließbewegung, sodass das freie Ende der Verschlussnadel stets präzise in ihren Dichtsitz einlaufen kann. Bevorzugt ist dabei der Verlauf des Strömungskanals im Bereich des ersten Teils und/oder Halsabschnitts so ausgeführt, dass die Verschlussnadel bereits auf die Angussöffnung des Einsatzes ausgerichtet wird. Somit wird ein übermäßiger Verschleiß der Verschlussnadel zusätzlich vermieden.

Nach einer weiteren wichtigen Ausführungsform bildet der zweite Teil einen Dichtsitz für eine Ventilnadel einer Spritzgießdüse. Dies kann beispielsweise durch Anpassung des Durchmessers des Strömungskanals im Bereich des Endabschnitts an den Umfang der Ventilnadel einer Nadelverschlussdüse erreicht werden. Entsprechende Ausführungsformen haben den Vorteil, dass der Verschleiß des Einsatzes im Bereich des Endabschnitts, verursacht durch wiederholtes Abgleiten der Ventilnadel entlang der Oberflächen des Strömungskanals, deutlich reduziert wird.

Nach einer weiteren Ausführungsform ist der zweite Teil des Einsatzes dazu ausgebildet, mit dem vorderen Ende einen Abschnitt einer Wandung eines Formnestes zu bilden.

Der Halsabschnitt des Einsatzkörpers ist derart ausgebildet, dass der Einsatz mit seinem Halsabschnitt optimal an das Materialrohr, das Düsenmundstück oder die Wärmeleithülse einer Spritzgießdüse angepasst werden kann und somit leicht in diese Teile einsteckbar oder - z.B. in Form einer Hülse - auf diese Teile aufsetzbar ist. Der Endabschnitt kann hingegen optimal an ein anderes Bauteil, vorzugsweise an den Formeinsatz oder eine Formnestplatte - angepasst sein, sodass ein problemloser Einsatz in einem Spritzgießwerkzeug gewährleistet wird. Der Flansch kann als Stützflansch fungieren, wobei die Anschlagfläche des Flansches auf einem Formeinsatz aufliegt und die Oberseite des Flansches an dem Materialrohr, dem Düsenmundstück oder der Wärmeleithülse anliegt. Insgesamt schafft eine solche Geometrie ein Bauteil, dessen Abmessungen bei minimaler Baugröße optimal der Geometrie der Spritzgießdüse sowie des Formeinsatzes oder des zu spritzenden Gussstücks angepasst werden können. Im letzteren Fall, wirkt der Einsatz formgebend gegenüber dem zu gießenden Artikels.

In einer bevorzugten Ausführungsform ist vorgesehen, dass der Endabschnitt mit der äußeren Beschichtung dazu ausgebildet ist, entlang eines äußeren Umfangs mit einem Formeinsatz mindestens eine Dichtfläche auszubilden. Durch eine möglichst genaue Anpassung des Endabschnitts des Einsatzes zur Formkavität eines Formeinsatzes können Spritzgießgussstücke möglichst präzise hergestellt werden. Durch die erfindungsgemäße Beschichtung wird zudem eine Wärmeübertragung von dem Einsatz auf den Formeinsatz deutlich reduziert, wodurch ein Abkühlen der Schmelze in der Spritzgießdüse verhindert oder zumindest minimiert wird. Zudem wirkt sich die Ausführungsform positiv auf die Nachdruckzeiten beim Spritzgießen aus, die insbesondere bei Nadelverschlusssystemen begrenzt sein können und somit risikobehaftet.

Des Weiteren betrifft die Erfindung eine Spritzgießdüse für ein Spritzgießwerkzeug mit einem erfindungsgemäßen Einsatz. Bei der Spritzgießdüse kann es sich sowohl um eine Heißkanaldüse als auch um eine Kaltkanaldüse handeln. Dabei kann der Einsatz sowohl in Spritzgießdüsen mit offenem Anguss und Düsenspitze als auch in Spritzgießdüsen mit Wärmeleithülse und Nadelverschluss Verwendung finden.

Spritzgießdüsen mit dem erfindungsgemäßen Einsatz profitieren von der Beschichtung des Einsatzkörpers, d.h. bei der Montage muss nur ein einziges Bauteil gehandhabt werden. Durch die Verbindung der mehreren unterschiedlichen Materialien können die vorteilhaften Eigenschaften der Materialien punktgenau und auf kleinstem Bauraum bestmöglich genutzt werden.

Durch die Verwendung eines hochwärmeleitfähigen Materials für den Einsatzkörper oder zumindest für den ersten Teil des Einsatzkörpers und Vorsehen einer Beschichtung des Endabschnitts und der Anschlagfläche aus einem Material mit einer geringen Wärmeleitfähigkeit wird bei der Zuführung der Schmelze innerhalb der Düsenspitze zum Formeinsatz eine optimale Temperaturverteilung und thermische Trennung erreicht. Da zwischen dem Einsatzkörper und der Beschichtung eine feste Verbindung besteht, die selbst hohen Wechselbelastungen durch Abkühlung und Aufheizen des Werkzeugs standhält, wird nicht nur die komplizierte und aufwendige Handhabung durch den Einbau mehrerer Einzelteile vermieden, sondern auch eine langlebige und damit kostengünstige Spritzgießdüse bereit gestellt.

Handelt es sich bei der Spritzgießdüse, um eine Nadelverschlussdüse, hat dies zudem den Vorteil, dass der Einsatz zusätzlich als Zentrierkörper fungiert, weil die Nadel innerhalb des Einsatzes lagestabil und präzise geführt wird. Dabei werden Beschädigungen an der Verschlussnadel aber auch Verschleißerscheinungen am Einsatz vermieden.

Die Spritzgießdüse selbst kann in verschiedenen Ausführungsformen verschiedene Bestandteile umfassen. Alle Ausführungsformen der Spritzgießdüse weisen ein Materialrohr auf, in dem wenigstens ein Strömungskanal ausgebildet ist, der mit einer von wenigstens einem Formeinsatz gebildeten Formkavität des Spritzgießwerkzeugs strömungsverbunden ist.

Je nach Ausführungsform weist die Spritzgießdüse zudem eine Wärmeleithülse auf, welche als Düsenmundstück ausgeführt sein kann. Die Wärmeleithülse wird endseitig in das Materialrohr eingesetzt oder auf das Materialrohr aufgesetzt und bildet die Austrittsöffnung für den Strömungskanal. Die Wärmeleithülse wird dabei aus einem hochwärmeleitfähigen Material gefertigt damit die Schmelze mit konstant hoher Temperatur dem Formeinsatz zugeführt werden kann, ohne dass ein sogenannter kalter Pfropfen entsteht.

Der erfindungsgemäße Einsatz ist an dem formeinsatzseitigen Ende des Materialrohrs anordnenbar, wobei der Einsatz formeinsatzseitig direkt in oder an dem Materialrohr oder in oder an einer separaten Wärmeleithülse anordnenbar ist. Dabei kann der Einsatz in das Materialrohr oder die Wärmeleithülse eingesetzt oder aufgesetzt sein. Der Halsabschnitt des Einsatzkörpers ist dazu entsprechend angepasst. Der Einsatz ist weiterhin getrennt von den restlichen Bestandteilen der Spritzgießdüse ausgebildet und stellt einen separaten Bestandteil der Spritzgießdüse dar. Auf diese Weise können die Materialien des Einsatzes unabhängig von den Materialien der anderen Bestandteile der Spritzgießdüse gewählt und individuell an die jeweiligen Anforderungen angepasst werden.

Dabei hat es sich als besonders vorteilhaft erwiesen, wenn der Einsatz längsverschieblich in Bezug auf das Materialrohr, das Düsenmundstück oder die Wärmeleithülse und den Formeinsatz ausgebildet ist und während des Betriebes der Spritzgießdüse - d.h. sobald das Werkzeug seine Betriebstemperatur erreicht hat - zwischen dem Materialrohr und dem Formeinsatz, dem Düsenmundstück und dem Formeinsatz oder zwischen der Wärmeleithülse und dem Formeinsatz eingeklemmt ist. Somit ist mit dieser Ausführungsform keine Längenänderung durch unterschiedliche Wärmeausdehnungskoeffizienten am Heiss- und/oder Kaltkanalsystem zu berücksichtigen. Durch den längsverschieblichen Sitz ist es möglich, den Einsatz schnell und bequem ein- und auszubauen. Hierzu sind keine Werkzeuge oder sonstigen Hilfsmittel erforderlich. Auch zur Befestigung des Einsatzes in der Spritzgießdüse sind keine zusätzlichen Teile oder Hilfsmittel, wie beispielsweise Schraubgewinde, Schraubhülsen o.dgl. am Einsatz selbst oder in der Spritzgießdüse vorgesehen werden, weil der Einsatz während des Betriebes der Spritzgießdüse durch Einklemmen zuverlässig gesichert ist. Der Austausch des Einsatzes kann dennoch stets schnell und kostengünstig erfolgen.

Des Weiteren ist es vorteilhaft wenn der Halsabschnitt zumindest abschnittsweise dem Materialrohr, dem Düsenmundstück oder der Wärmeleithülse formangepasst ist und der Endabschnitt mit der Beschichtung zumindest abschnittsweise dem Formeinsatz formangepasst ist. Durch die Formanpassung wird eine stets dichte Verbindung erreicht und damit verhindert, dass Schmelze in Zwischenräume gelangen kann, wobei stets eine Längsbewegung des Einsatzes möglich bleibt, um thermisch bedingte Lageänderungen der Spritzgießdüse ausgleichen zu können. Der Einsatz bildet somit mit den anderen Teilen der Spritzgießdüse ein Stecksystem, aus dem der Einsatz leicht durch Herausziehen werkzeuglos entnommen werden kann, gleichzeitig aber während des Betriebs der Spritzgießdüse zuverlässig durch Einklemmen gesichert ist.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: einen schematischen Längsschnitt durch eine erste Ausführungsform eines erfindungsgemäßen Einsatzes,
- Fig. 2: einen schematischen Längsschnitt durch eine andere Ausführungsform eines erfindungsgemäßen Einsatzes,
- Fig. 3: eine weitere schematische Ansicht auf eine Ausführungsform eines erfindungsgemäßen Einsatzes,
- Fig. 4: einen schematischen Längsschnitt durch eine andere Ausführungsform eines erfindungsgemäßen Einsatzes,
- Fig. 5: einen schematischen Längsschnitt durch eine andere Ausführungsform eines erfindungsgemäßen Einsatzes mit einem zweiteiligen Einsatzkörper und
- Fig. 6: einen schematischen Längsschnitt durch eine andere Ausführungsform eines erfindungsgemäßen Einsatzes mit einem zweiteiligen Einsatzkörper.

Bei der Verarbeitung von Duroplasten und Elastomeren, wo der Kunststoff unter Temperatureinfluss aushärtet, werden anstelle von Heißkanalsystemen entsprechend Kaltkanalsysteme eingesetzt. Wenn daher nachfolgend Heißkanalsysteme beschrieben werden, so sind damit - je nach Anwendung - sinngemäß stets auch Kaltkanalsysteme gemeint.

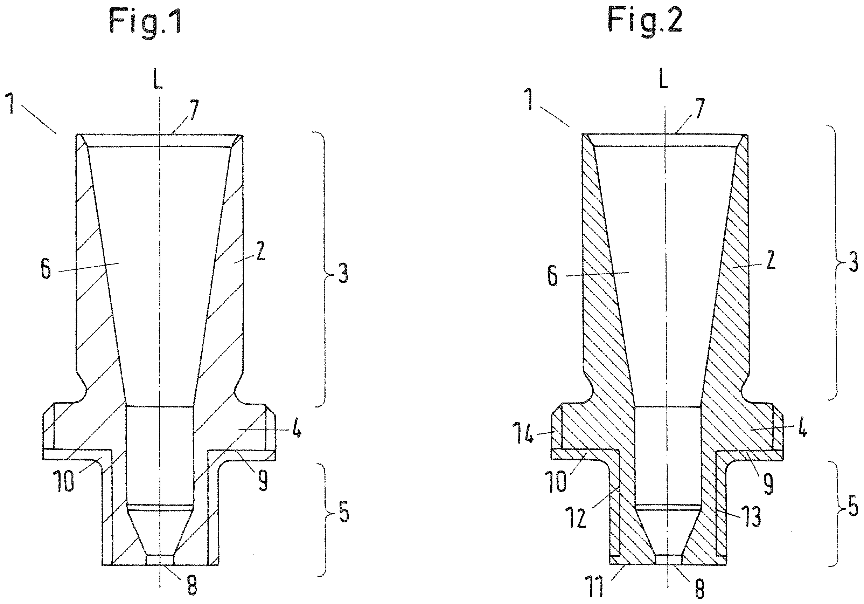

Die Fig. 1 und 2 zeigen jeweils einen Längsschnitt durch einen erfindungsgemäßen Einsatz 1 für eine Spritzgießdüse (nicht dargestellt). Der Einsatz 1 wird jeweils durch einen entsprechenden Einsatzkörper 2 aus einem hochwärmeleitfähigen Material gebildet. Dabei weist der Einsatzkörper 2 einen Halsabschnitt 3, einen Flansch 4 und einen Endabschnitt 5 auf. Der Einsatzkörper 2 ist mit seinem Halsabschnitt 3 mit einer Spritzgießdüse verbindbar, beispielsweise durch Einsetzen oder Aufsetzen auf die Spritzgießdüse. Der Flansch 4 steht radial gegenüber dem Halsabschnitt 3 und dem Endabschnitt 5 vor. Der Endabschnitt 5 kann in eine Formkavität eines Formeinsatzes (nicht dargestellt) eingesetzt werden und ist bevorzugt an die Form der Formkavität angepasst. Zudem weist der Einsatzkörper 2 mindestens einen Strömungskanal 6 mit einer Eintrittsöffnung 7 und einer Austrittsöffnung 8 auf. Der Endabschnitt 5 und eine Anschlagfläche 9 des Flansches 4 weisen eine äußere Beschichtung 10 aus einem zweiten Material mit einer geringen Wärmeleitfähigkeit auf, wobei die Anschlagfläche 9 diejenige Fläche des Flansches 4 ist, die der Austrittsöffnung 8 zugewandt ist.

Der Einsatzkörper 2 ist vorzugsweise um eine Längsachse L des Einsatzes 1 rotationssymmetrisch ausgeführt. Der Einsatzkörper 2 mit Halsabschnitt 3, Flansch 4 und Endabschnitt 5 ist vorzugsweise einstückig ausgebildet.

Fig. 2 zeigt eine bevorzugte Ausführungsform, wobei die Beschichtung 10 aus einem Material mit einer geringen Wärmeleitfähigkeit vor einer Stirnfläche 11 des Endabschnitts 5 endet. Die Stirnfläche 11 des Endabschnitts 5 ist die Fläche, in welche die Austrittsöffnung 8 eingelassen ist und die mit einer Angussöffnung eines Formeinsatzes in Verbindung steht. Dadurch wird ein Grenzbereich zwischen den beiden unterschiedlichen Materialien des Einsatzkörpers 2 und der Beschichtung 10 an der Stirnfläche 11 vermieden, der einer erhöhten mechanischen Belastung ausgesetzt wäre.

Es ist zudem bevorzugt, dass die Beschichtung 10 in einer Vertiefung 12 in der Außenseite des Endabschnitts 5 angeordnet ist. Auch die Anschlagfläche 9 des Flansches 4 kann eine solche Vertiefung 12 aufweisen, dieses ist hier nicht dargestellt. Durch diese Vertiefung 12 kann eine formschlüssige Verbindung zwischen dem Einsatzkörper 2 und der Beschichtung 10 erzielt werden. Die Beschichtung 10 aus einem Material mit einer geringen Wärmeleitfähigkeit und der Einsatzkörper 2 aus einem hochwärmeleitenden Material weisen eine ebene Außenfläche auf, welche mechanischen Beanspruchungen standhält. Dabei weist insbesondere der Grenzbereich zwischen den beiden unterschiedlichen Materialien eine ebene Außenfläche auf, wodurch keine Kante freiliegt. Zudem sind die Beschichtung 10 und der Endabschnitt 5 sowie die Anschlagfläche 9 über eine Kontaktfläche 13 miteinander verbunden.

Der Flansch 4 kann bevorzugt an seiner radial äußeren Fläche 13 ein Gewinde aufweisen (nicht dargestellt), wodurch der Einsatz 1 einfach in die Spritzgießdüse eingesetzt und entfernt werden kann.

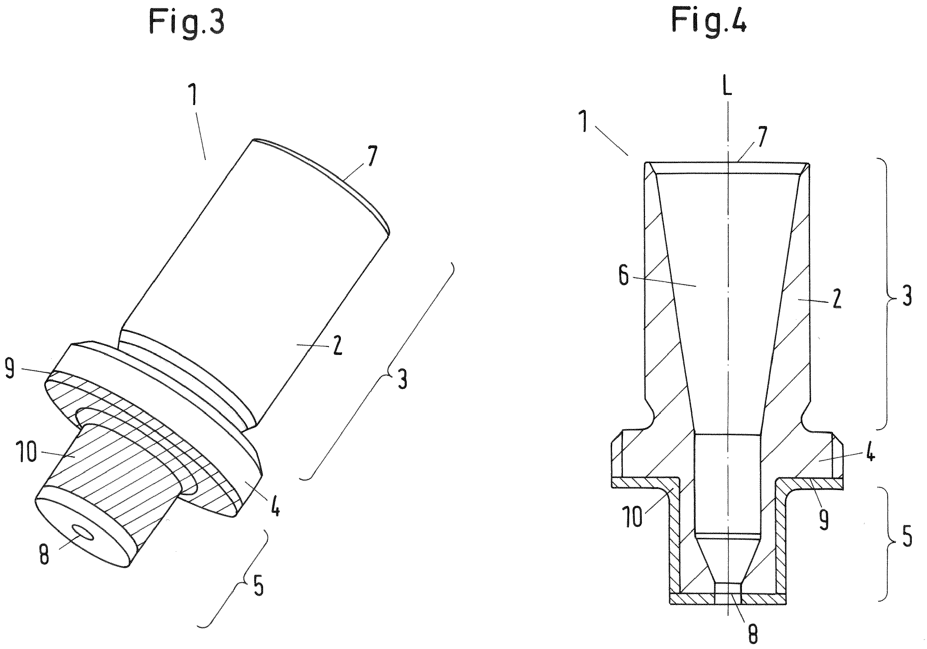

Fig. 3 zeigt eine perspektivische Ansicht der in Fig. 2 beschriebenen Ausführungsform eines erfindungsgemäßen Einsatzes 1.

Fig. 4 zeigt eine alternative Ausführungsform eines erfindungsgemäßen Einsatzes 1, wobei die Beschichtung 10 neben der Außenseite des Endabschnitts 5 und der Anschlagfläche 9 auch die Stirnfläche 11 des Endabschnitts 5 bedeckt. In dieser Ausführungsform weist die Beschichtung 10 auf der Stirnfläche 11 des Endabschnitts 5 eine Austrittsöffnung 8 auf, aus der die Materialschmelze austritt. Durch diese Ausgestaltung ist keine Grenzfläche zwischen zwei Materialien auf der Stirnfläche 11 ausgebildet, welche zu einem Abplatzen der Beschichtung 10 führen könnte.

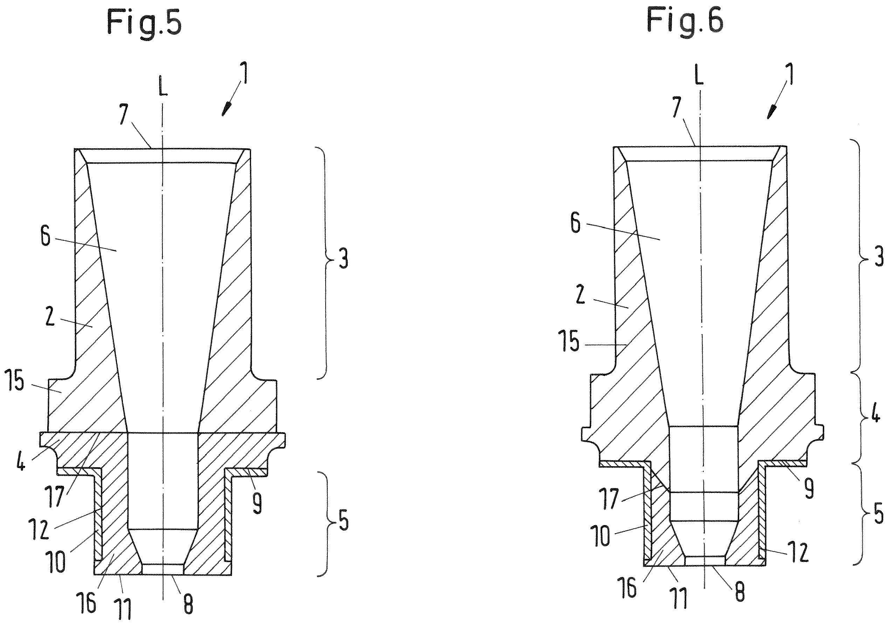

Die Fig. 5 und 6 zeigen jeweils einen Längsschnitt durch eine weitere bevorzugte Ausführungsform eines erfindungsgemäßen Einsatzes 1. In beiden Abbildungen Fig. 5 und 6 ist der Einsatzkörper 2 zweistückig ausgebildet. Dabei weist der Einsatzkörper 2 einen ersten Teil 15 und einen zweiten Teil 16 auf. Der erste Teil 15 wird im Wesentlichen vom Halsabschnitt 3 und der zweite Teil 16 wird im Wesentlichen vom Endabschnitt 5 gebildet. Dabei ist bevorzugt, dass der erste Teil 15 aus einem hochwärmeleitfähigen Material gefertigt ist und sich über den Halsabschnitt 3 des Einsatzkörpers 2 bis zu einer Begrenzungsfläche 17 erstreckt. Der der zweite Teil 16 ist aus einem dritten Material gefertigt ist und erstreckt sich von der Begrenzungsfläche 17 über den Endabschnitt 5 des Einsatzkörpers 2. Die beiden Teile 15, 16 sind in und/oder entlang der Begrenzungsfläche 17 miteinander verbunden. Die Beschichtung 10 ist auch bei dieser Ausführungsform auf der Anschlagfläche 9 des Flansches 4 und zumindest in Teilen des Endabschnitts 5 vorgesehen.

Dabei endet die Beschichtung 10 aus einem Material mit einer geringen Wärmeleitfähigkeit in der dargestellten Ausführungsform vor einer Stirnfläche 11 des Endabschnitts 5. Es ist zudem bevorzugt, dass die Beschichtung 10 in einer Vertiefung 12 in der Außenseite des Endabschnitts 5 angeordnet ist.

In Fig. 5 ist gezeigt, dass sich die Begrenzungsfläche 17 zwischen dem ersten Teil 15 und dem zweiten Teil 17 senkrecht zur Längsachse L des Einsatzkörpers 2 erstreckt.

Fig. 6 zeigt eine alternative Ausgestaltung der Begrenzungsfläche 17. Dabei erstreckt sich die Begrenzungsfläche 17 zwischen dem ersten Teil 15 und dem zweiten Teil 17 schrägzur Längsachse L des Einsatzkörpers 2.

Die Erfindung ist nicht auf eine der vorbeschriebenen Ausführungsformen beschränkt, sondern in vielfältiger Weise abwandelbar. So kann man den Einsatz 1 mit dem Halsabschnitt 3 - wie in den Fig. 1 bis 6 dargestellt - derart ausgebilden, dass der Einsatz 1 mit seinem Halsabschnitt 3 optimal in das Materialrohr, das Düsenmundstück oder die Wärmeleithülse der Spritzgießdüse eingesetzt werden kann. Man kann den Halsabschnitt 3 aber auch derart gestalten, dass dieser das Materialrohr, das Düsenmundstück oder die Wärmeleithülse von außen umgreift oder übergreift. Wichtig ist, dass die Anschlagfläche 9 und/oder zumindest der Endabschnitt 5 zumindest teilweise eine äußere Beschichtung 10 aus einem zweiten Material mit einer geringen Wärmeleitfähigkeit aufweist, so dass zwischen dem Einsatz 1 und dem Werkzeug eine thermische Trennung erfolgt.

Man erkennt daher, dass die Erfindung einen Einsatz 1 zur Verwendung in einer Spritzgießdüse vorsieht, mit einem Einsatzkörper 2 aus einem hochwärmeleitenden Material, in dem mindestens ein Strömungskanal 6 mit einer Eintrittsöffnung 7 und einer Austrittsöffnung 8 ausgebildet ist, wobei der Einsatzkörper 2 einen Halsabschnitt 3, zum Verbinden mit der Spritzgießdüse, einen Endabschnitt 5, zum Einsetzen in eine Formkavität eines Formeinsatzes und einen radial gegenüber dem Endabschnitt 5 vorstehenden Flansch 4 mit einer Anschlagfläche 9 aufweist, wobei die Anschlagfläche 9 auf einer der Austrittsöffnung 8 zugewandten Fläche des radial vorstehenden Flansches 4 ausgebildet ist. Erfindungsgemäß weisen die Anschlagfläche 9 und der Endabschnitt 5 zumindest teilweise eine äußere Beschichtung 10 aus einem zweiten Material mit einer geringen Wärmeleitfähigkeit auf.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszei chenliste

- 1: Einsatz
- 2: Einsatzkörper
- 3: Halsabschnitt
- 4: Flansch
- 5: Endabschnitt
- 6: Strömungskanal
- 7: Eintrittsöffnung
- 8: Austrittsöffnung
- 9: Anschlagfläche des Flansches 4
- 10: Beschichtung
- 11: Stirnfläche
- 12: Vertiefung
- 13: Kontaktfläche
- 14: Radial äußere Fläche des Flansches 4
- 15: Erster Teil
- 16: Zweiter Teil
- 17: Begrenzungsfläche
- L: Längsachse des Einsatzkörpers 2

## Patentansprüche

1. Einsatz (1) zur Verwendung in einer Spritzgießdüse, mit einem Einsatzkörper (2) aus mindestens einem hochwärmeleitenden Material, in dem mindestens ein Strömungskanal (6) mit einer Eintrittsöffnung (7) und einer Austrittsöffnung (8) ausgebildet ist, wobei der Einsatzkörper (2) einen Halsabschnitt (3), zum Verbinden mit der Spritzgießdüse, einen Endabschnitt (5), zum Einsetzen in eine Formkavität eines Formeinsatzes und einen radial gegenüber dem Endabschnitt (5) vorstehenden Flansch (4) mit einer Anschlagfläche (9) aufweist, wobei die Anschlagfläche (9) auf einer der Austrittsöffnung (8) zugewandten Fläche des radial vorstehenden Flansches (4) ausgebildet ist, **dadurch gekennzeichnet, dass** die Anschlagfläche (9) und der Endabschnitt (5) zumindest teilweise eine äußere Beschichtung (10) aus einem zweiten Material mit einer geringen Wärmeleitfähigkeit aufweist.

2. Einsatz (1) nach Anspruch 1, **dadurch gekennzeichnet, dass** das zweite Material mit einer geringen Wärmeleitfähigkeit einen keramischer Werkstoff aufweist.

3. Einsatz (1) nach einem der vorangegangenen Ansprüche, **dadurch gekennzeichnet, dass** das zweite Material mit einer geringen Wärmeleitfähigkeit Zirkoniumoxid aufweist.

4. Einsatz (1) nach einem der vorangegangenen Ansprüche, **dadurch gekennzeichnet, dass** der Endabschnitt (5) eine Stirnfläche (11) aufweist, in der die Austrittsöffnung (8) eingelassen ist, wobei die äußere Beschichtung (10) aus einem zweiten Material mit einer geringen Wärmeleitfähigkeit vor der Stirnfläche (11) endet.

5. Einsatz (1) nach einem der vorangegangenen Ansprüche, **dadurch gekennzeichnet, dass** die äußere Beschichtung (10) des Endabschnitts (5) und/oder der Anschlagfläche (9) in einer Vertiefung (12) des Endabschnitt (5) und/oder der Anschlagfläche (9) angeordnet ist, so dass der Endabschnitt (5) und/oder die Anschlagfläche (9) aus dem hochwärmeleitfähigen Material und die äußere Beschichtung (10) aus einem zweiten Material an einer Grenzfläche zwischen den beiden Materialien eine ebene Außenfläche ausbilden.

6. Einsatz (1) nach einem der vorangegangenen Ansprüche, **dadurch gekennzeichnet, dass** der Flansch (4) auf einer radial äußeren Fläche ein Gewinde aufweist.

7. Einsatz (1) nach einem der vorangegangene Ansprüche, **dadurch gekennzeichnet, dass** der Einsatzkörper (2) zweistückig ausgebildet ist, wobei der erste Teil (15) im Wesentlichen vom Halsabschnitt (3) und der zweite Teil (16) im Wesentlichen vom Endabschnitt (5) gebildet werden, und wobei der erste Teil (15) aus einem hochwärmeleitenden Material gefertigt ist und sich von Halsabschnitt (3) des Einsatzkörpers (2) bis zu einer Begrenzungsfläche (17) erstreckt und dass der zweite Teil (16) aus einem dritten Material gefertigt ist, welches vom hochwärmeleitenden Material verschiedenen ist, wobei sich der zweite Teil (16) von der Begrenzungsfläche (17) bis zum Endabschnitt (5) des Einsatzkörpers (2) erstreckt, und wobei der erste Teil (15) und der zweite Teil (16) in und/oder entlang der Begrenzungsfläche (17) miteinander verbunden sind.

8. Einsatz (1) nach Anspruch 7, **dadurch gekennzeichnet, dass** sich die Begrenzungsfläche (17) senkrecht oder schräg zur Längsachse (L) des Einsatzkörpers (2) estreckt.

9. Einsatz (1) nach einem der vorangegangenen Ansprüche, **dadurch gekennzeichnet, dass** der Endabschnitt (5) mit der äußeren Beschichtung (10) dazu ausgebildet ist, entlang eines äußeren Umfangs mit einem Formeinsatz mindestens eine Dichtfläche auszubilden.

10. Spritzgießdüse für ein Spritzwerkzeug mit Einsatz (1) gemäß einem der vorangegangenen Ansprüche.

11. Spritzgießdüse nach Anspruch 10 mit einem Materialrohr in dem wenigstens ein Strömungskanal ausgebildet ist, der mit einer von wenigstens einem Formeinsatz gebildeten Formkavität des Spritzgießwerkzeugs strömungsverbunden ist, **dadurch gekennzeichnet, dass** der Einsatz (1) an dem formeinsatzseitigen Ende des Materialrohrs anordenbar ist.

12. Spritzgießdüse nach einem der Ansprüche 10 oder 11, **dadurch gekennzeichnet, dass** die Spritzgießdüse eine Wärmeleithülse aufweist an deren formeinsatzseitigen Ende der Einsatz (1) anordenbar ist.

13. Spritzgießdüse nach einem der Ansprüche 10 bis 12, **dadurch gekennzeichnet, dass** der Einsatz (1) längsverschieblich in Bezug auf das Materialrohr, das Düsenmundstück oder die Wärmeleithülse und den Formeinsatz ausgebildet ist und während des Betriebes der Spritzgießdüse zwischen dem Materialrohr und dem Formeinsatz, dem Düsenmundstück und dem Formeinsatz oder zwischen der Wärmeleithülse und dem Formeinsatz eingeklemmt ist.

14. Spritzgießdüse nach einem der Ansprüche 10 bis 13, **dadurch gekennzeichnet, dass** der Halsabschnitt (3) des Einsatz (1) zumindest abschnittsweise dem Materialrohr, dem Düsenmundstück oder der Wärmeleithülse formangepasst ist und der Endabschnitt mit der Beschichtung zumindest abschnittsweise dem Formeinsatz formangepasst ist.

15. Spritzgießdüse nach einem der Ansprüche 10 bis 14, **dadurch gekennzeichnet, dass** der Halsabschnitt (3) des Einsatzes (1) einen höheren Wärmeausdehnungskoeffizienten aufweist als das Materialrohr und/oder das Düsenmundstück und/oder die Wärmeleithülse.
